(19) **Europäisches Patentamt**

**European Patent Office**

**Office européen des brevets**

(11) Veröffentlichungsnummer: **0 429 904 A1**

(12) **EUROPÄISCHE PATENTANMELDUNG**

(21) Anmeldenummer: 90121323.1

(51) Int. Cl.⁵: **F16L 41/06**

(22) Anmeldetag: 07.11.90

(30) Priorität: 28.11.89 DE 3939248

(43) Veröffentlichungstag der Anmeldung:
05.06.91 Patentblatt 91/23

(84) Benannte Vertragsstaaten:
DE ES FR GB IT SE Patentblatt 2

(71) Anmelder: **ELECTROLUX SIEGEN GMBH**
**In der Steinwiese 16**
**W-5900 Siegen 1(DE)**

(72) Erfinder: **Giesler, Rolf.Dieter**
**Stephanstrasse 7**
**W-5910 Kreuztal(DE)**
Erfinder: **Müller, Volker**
**Am Langenstueck 14**
**W-5912 Hilchenbach-Allenbach(DE)**
Erfinder: **Almèn, Karl-Gösta**
**Am Kronberg 44**
**W-5900 Siegen(DE)**

(74) Vertreter: **Herrmann-Trentepohl, Werner,**
**Dipl.-Ing. et al**
**Kirschner, Grosse, Bockhorni Forstenrieder**
**Allee 59**
**W-8000 München 71(DE)**

(54) **Vorrichtung zum Anstechen von Leitungen.**

(57) Vorrichtung zum Anstechen einer Leitung, insbesondere einer Druckleitung einer zu entsorgenden Kühlvorrichtung, mit einem Grundkörper (1), der eine gegen die anzustechende Leitung wirkende Dichtung (2) aufweist, einem Anstechdorn (3), einem Leitungsanschluß (4) sowie einer Haltevorrichtung (16, 17) für die anzustechende Leitung, bei der der Dorn (3) im Innern des Grundkörpers (1) senkrecht zur anzustechenden Leitung verschiebbar gelagert ist, der Grundkörper (1) eine Kappe (5) aufweist, die gleichgerichtet mit dem Dorn (3) senkrecht zur anzustechenden Leitung verschiebbar ist, und der Dorn (3) mit seinem leitungsabgewandten Ende im Kappenkopf (6) so gelagert ist, daß er bei einer Verschiebung der Kappe (5) mitgeführt wird.

Fig. 2

# VORRICHTUNG ZUM ANSTECHEN VON LEITUNGEN

Die Erfindung betrifft eine Vorrichtung zum Anstechen einer Leitung, insbesondere einer Druckleitung einer zu entsorgenden Kühlvorrichtung, mit einem Grundkörper, der eine gegen die anzustechende Leitung wirkende Dichtung aufweist, einem Anstechdorn, einem Leitungsanschluß sowie einer Haltevorrichtung für die anzustechende Leitung.

Kühlvorrichtungen enthalten in mehr oder weniger großen Mengen Kühlmedium. Bei modernen Kompressorkühlschränken besteht dieses Kühlmedium beispielsweise aus einem Frigen, bei Absorptionskühlgeräten aus einer Ammoniak/Wasser/Chromat-Mischung. Diese Füllmedien sind als Umweltschadstoffe anzusehen; Frigene gehören zu den Fluorchlorkohlenwasserstoffen, die in freiem Zustand eine der Hauptursachen für die Zerstörung der Ozonschicht in der Atmosphäre darstellen, während Chromverbindungen und insbesondere Chromat als kanzerogen gilt. Aus diesem Grunde müssen die Füllmedien einer umweltgerechten Entsorgung zugeführt werden, wenn die Kühlvorrichtung ausgedient hat.

Nach neueren Erhebungen gelangen jährlich etwa 2,3 Mio. Kühlvorrichtungen auf den Müll, für deren umweltgerechte Behandlung gesorgt werden muß. Probleme gibt es dabei in zweierlei Hinsicht. Zum einen stehen die Kühlsysteme unter Druck, so daß bereits eine geringfügige Beschädigung einer Kühlleitung oder eine unfachmännische Handhabung eines Entsorgungssystems dazu führen kann, daß Kühlmedium unkontrolliert austritt, bis hin zur völligen Entleerung des Kühlsystems. Zum anderen muß strikt zwischen Kompressions- und Absorptionskühlvorrichtungen unterschieden werden; Kompressionskühlsysteme enthalten als Kühlmedium ein verflüssigtes Gas, das bei Druckentlastung vollständig verdampft. Diese Systeme gegen ihr Kühlmedium nach Öffnen der Kühlmittelleitung mehr oder weniger vollständig ab. Dagegen enthalten Absorptionskühlsysteme eine unter Druck stehende Flüssigkeit, die nach der Druckentlastung nicht in den gasförmigen Zustand übergeht; nach Öffnen der Kühlmittelleitung erfolgt anfangs eine Druckentlastung und Austritt von relativ geringen Gas- und Flüssigkeitsmengen, während der Hauptteil des Kühlmittels im Kühlmittelsystem zurückbleibt. Aus Absorptionskühlsystemen muß daher das Kühlmedium aufwendig entfernt werden; beispielsweise kann dies durch Herausdrücken oder Herausspülen geschehen. Die beiden Kühlsystemarten müssen bei der Entsorgung getrennt gehandhabt werden, wozu verschiedene Ausrüstungen erforderlich sind.

Die Aufgabe der vorliegenden Erfindung liegt in der Schaffung einer Vorrichtung, mit der Kühlmittelleitungen von Absorptionssystemen angestochen und vollständig entleert werden können, ohne daß es zum unkontrollierten Austritt des Kühlmediums kommt. Die Vorrichtung soll aber zugleich so gestaltet sein, daß sie auch bei Kompressionskühlsystemen oder generell bei Druckleitungen mit zu entsorgendem Inhalt eingesetzt werden kann.

Diese Aufgabe wird mit einer Vorrichtung der eingangs beschriebenen Art gelöst, bei der der Dorn im Innern des Grundkörpers senkrecht zur anzustechenden Leitung verschiebbar gelagert ist, der Grundkörper eine Kappe aufweist, die gleichgerichtet mit dem Dorn senkrecht zur anzustechenden Leitung verschiebbar ist, und der Dorn mit seinem leitungsabgewandten Ende im Kappenkopf so gelagert ist, daß er bei einer Verschiebung der Kappe mitgeführt wird.

Bevorzugte Ausführungsformen sind Gegenstand der Unteransprüche und werden nachstehend mit Bezug auf die beiliegenden Abbildungen näher beschrieben.

Die erfindungsgemäße Vorrichtung zum Anstechen von Leitungen kann nicht nur zum Entleeren von unter Druck stehenden Kühlmittelleitungen jeder Art verwandt werden, sondern ganz universell zum Anstechen von Leitungen oder Systemen, deren Inhalt nicht in die Umwelt gelangen darf und daher entsorgt werden muß.

Von den beigefügten Abbildungen zeigen:

Fig. 1    eine Seitenansicht einer erfindungsgemäßen Anstechvorrichtung, die als Grippzange ausgebildet ist,

Fig. 2    einen senkrechten Schnitt durch die Anstechvorrichtung gemäß Fig. 1;

Fig. 3    und

Fig. 4    den Anstechdorn der erfindungsgemäßen Vorrichtung in seitlicher Ansicht sowie in Frontansicht und teilweise aufgeschnittenem Zustand;

Fig. 5    einen waagerechten Schnitt durch die Anstechvorrichtung gemäß Fig. 1 und

Fig. 6    einen Schnitt durch Kappe, Führung und Oberteil des Grundkörpers.

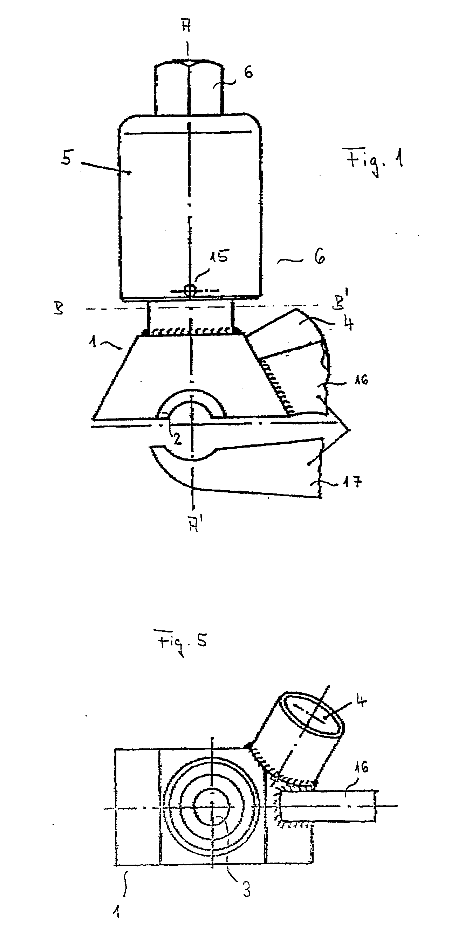

Fig. 1 zeigt einen Schnitt durch eine Anstechvorrichtung gemäß der Erfindung, die als Grippzange ausgebildet ist. Ein Grundkörper 1 weist an seiner Unterseite eine - im Schnitt - kreisausschnittförmige Aussparung auf, die mit einer Dichtung 2 ausgekleidet ist. Der Grundkörper 1 hat in einem unteren Teil einen trapezförmigen Querschnitt, an dem seitlich ein Leitungsansatz bzw. eine Muffe 4 angesetzt ist.

Der Grundkörper 1 geht in seinem oberen Teil in einen senkrechten Aufsatz über, der durch eine Schweißnaht fest damit verbunden ist, und zur Aufnahme eines Anstechdorns (nicht gezeigt) bestimmt ist. Auf diesen Ansatz ist eine Kappe 5 aufgesetzt, die über ein Schraubgewinde beweglich gelagert ist und in einem Kappenkopf 6 endet. Der Kappenkopf 6 ist als Sechskant ausgebildet, der mit einem herkömmlichen Normschlüssel gegriffen werden kann. Eine Ausdrehsicherung 15 sichert den Kappenkopf gegen unbeabsichtigtes Abdrehen vom Grundkörper 1 bzw. dem Aufsatzteil des Grundkörpers 1.

Unterhalb des Grundkörpers befindet sich die untere Backe 17 der Grippzange, die mit dem Grundkörper 1 zusammenwirkt. Das anzustechende Leitungsrohr wird in dem Hohlraum aufgenommen, der von der mit der Dichtung 2 ausgekleideten Aussparung des Grundkörpers 1 und der Einwölbung der unteren Backe 17 gebildet wird; das Rohr verläuft in diesem Fall senkrecht zur Papierebene. An den Grundkörper 1 ist seitlich der obere Schenkel 16 der Grippzange angesetzt.

Bevorzugt ist die erfindungsgemäße Anstechvorrichtung als Grippzange ausgebildet. Andere Ausbildungsformen sind möglich, etwa eine solche, bei der die Anstechvorrichtung mittels eines Bügels an der anzustechenden Leitung befestigt ist.

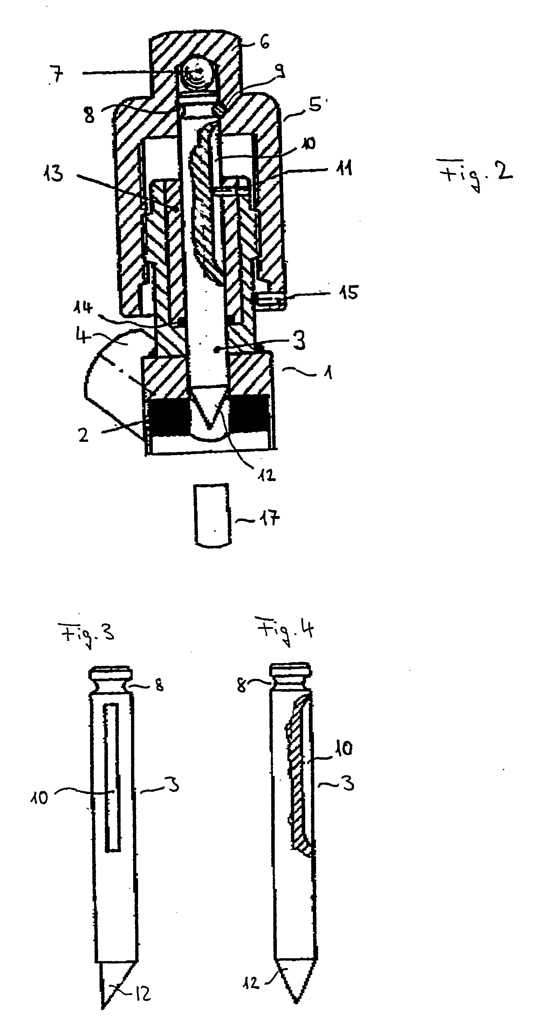

Fig. 2 zeigt einen Schnitt durch die Vorrichtung gemäß Fig. 1 entlang der Schnittlinie AA', also parallel zum Verlauf der anzustechenden Leitung, die zwischen der unteren Backe 17 und der Dichtung 2 des Grundkörpers 1 verläuft. Am Grundkörper 1 befindet sich links der Leitungsansatz 4.

Auf den oberen Teil des Grundkörpers 1 aufgeschraubt ist die Kappe 5 mit dem Kappenkopf 6. Die Kappe 5 ist durch eine am unteren Rand der Kappe eingeschraubte und nach unten ragende Ausdrehsicherung 15 gegen Abdrehen vom Grundkörper 1 gesichert.

Im Inneren des Grundkörpers 1 befindet sich der Dorn 3, der in der Höhe der Dichtung 2 in einer Spitze 12 endet. Der Dorn 3 ist im Innern des Grundkörpers 1 in einer Führungsbuchse 13 geführt. Der obere Teil der Vorrichtung ist durch einen O-Ring 14, der am unteren Ende der Führung 13 um den Dorn 3 angeordnet ist, gegen die anzustechende Leitung abgedichtet.

Der Dorn 3 endet auf der leitungsabgewandten Seite im Kappenkopf 6, mit dem er über eine Kugel 7 in Kontakt steht. Auf diese Weise wird die Längsbewegung der Kappe 5 auf den Dorn 3 übertragen und dieser beim Einschrauben der Kappe in die darunter verlaufende Leitung eingedrückt.

Am oberen oder leitungsabgewandten Ende des Dorns 3 befindet sich eine ringförmige Aussparung 8, in die eine im Kappenkopf gelagerte Kugel 9 eingreift; auf diese Art und Weise wird sichergestellt, daß der Dorn beim Herausdrehen der Kappe 5 mitgeführt wird und die in die Leitung eingedrückte Öffnung freigegeben wird, so daß Kühlmedium über den Leitungsansatz 4 und die daran angeschlossene Leitung abgeführt werden kann. Die Verwendung einer Kugel 7 zur Druckübertragung von der Kappe, die somit als Druckmutter ausgebildet ist, und einer oder mehrerer Kugeln 9 zur Mitnahme des Dorns 3 stellt sicher, daß Kappe 5 und Dorn 3 gegeneinander frei drehbeweglich sind.

Der Dorn 3 enthält in seinem zentralen Teil eine Aussparung 10. In diese Aussparung greift ein Stift 11 ein, so daß der Dorn 3 gegen Verdrehen gesichert ist. Diese Verdrehsicherung ist vor allem dann von Bedeutung, wenn die Dornspitze 12 nicht auf der Längsachse des Dorns 3 liegt, sondern asymmetrisch zum Dornrand hin verschoben ist.

Durch Verdrehen der Kappe 5 mit Hilfe eines am Kappenkopf 6, der beispielsweise als Sechskant ausgebildet ist, angesetzten passenden Schlüssels, wird der Dorn 3 in die zwischen der Dichtung 2 und der Backe 17 verlaufende Leitung eingepreßt und dadurch die Leitung angestochen. Durch gegenläufiges Drehen der Kappe 5 wird der Dorn 3 über die in die ringförmige Nut 8 eingreifende Kugel 9 wieder herausgezogen und die Öffnung freigegeben, so daß das in der Leitung befindliche Medium entweichen kann.

Alternativ ist es bei Absorptionskühlsystemen möglich, die Leitung mit zwei erfindungsgemäßen Vorrichtungen anzustechen, und anschließend eine der beiden Anstechvorrichtungen, vorzugsweise die höher gelegene, über die Leitung 4 mit Preßluft zu beaufschlagen, so daß das Kühlmedium mit Hilfe der Preßluft durch die entsprechende Leitung 4 der zweiten (tiefer angelegten) Anstechvorrichtung herausgeblasen und einer geregelten Entsorgung zugeführt werden kann.

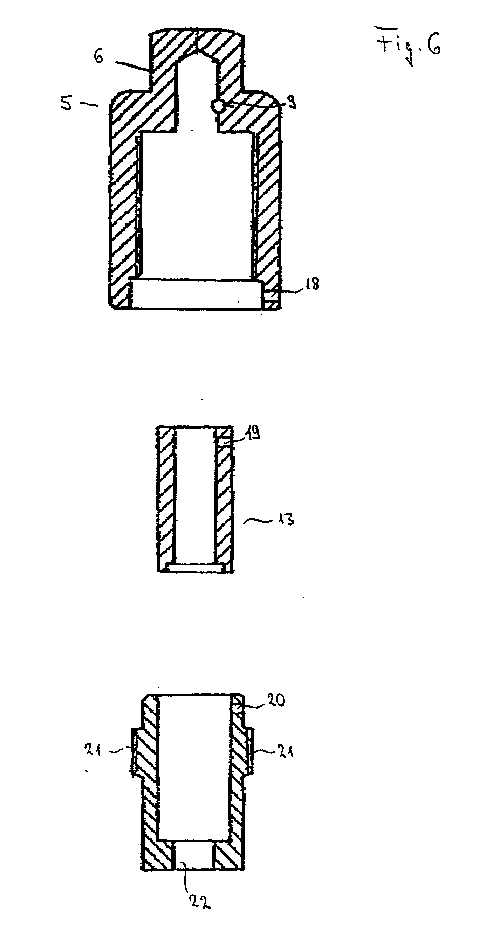

Fig. 3 zeigt einen Dorn 3, wie er erfindungsgemäß eingesetzt wird. Die Spitze 12 hat in der Projektion die Form eines schiefen Kegels mit an den Rand verlagerter Spitze; auf diese Art und Weise wird vermieden, daß die gebildete Öffnung allseits durch eingedrückte Metallränder begrenzt und dadurch das Ausströmen des Mediums behindert wird. Am anderen Ende des Dorns 3 ist dieser abgeflacht und bildet das Lager für die im Kappenkopf 6 angeordnete Kugel 7. Die ringförmige Einbuchtung oder Nut 8 dient der Aufnahme der Mitnahmekugel oder -kugeln 9. In Längsrichtung befindet sich seitlich im Dorn 3 ein Längsschlitz oder eine längliche Aussparung 10, in die die Verdrehsicherung 11 eingreifen kann.

Fig. 4 zeigt den Dorn von Fig. 3 in frontaler Ansicht, im Bereich der Aussparung 10 in teilweise aufgeschnittenem Zustand. Die längliche Aussparung 10 greift nur so tief in den ansonsten massiven Dorn ein, daß eine zuverlässige Sicherung gegen Verdrehen über den Stift 11 gewährleistet ist, dabei aber gleichzeitig die mechanische Festigkeit des Dorns nicht beeinträchtigt wird. Der Dorn ist vorzugsweise aus einer Hartmetallegierung gefertigt.

Fig. 5 zeigt einen Schnitt durch die erfindungsgemäße Vorrichtung gemäß Fig. 1 entlang der Linie B - B. An den Grundkörper 1 ist seitlich der Leitungsansatz 4 angesetzt sowie der Schenkel 16 der Grippzange. Im Zentrum befindet sich der Dorn 3, um den in konzentrischen Kreisen die verschiedenen Dicht-, Führungs- und Wandelemente verlaufen.

Fig. 6 zeigt einzelne Segmente der erfindungsgemäßen Vorrichtung, wie sie ineinander eingepaßt werden. Der obere Teil der Abbildung zeigt die Kappe 5 mit dem Kappenkopf 6 und dem Kugelelement 9; im Bereich der Innenwand der Kappe 5 befindet sich das Schraubgewinde, mit dem die Kappe auf dem Grundkörper 1 aufgeschraubt wird. Im unteren Bereich befindet sich eine Bohrung 18, durch den die Ausdrehsicherung 15 eingeschraubt werden kann.

Der mittlere Teil der Fig. 6 zeigt die Führungsbuchse 13, die in den Aufsatz des Grundkörpers 1 eingeschoben wird. Diese Führungsbuchse hat im oberen Bereich eine Bohrung 19, durch die die Verdrehsicherung 11 in die längliche Aussparung des Dorns 3 eingeschoben oder eingeschraubt wird.

Der Aufsatz des Grundkörpers 1, der im unteren Teil von Fig. 6 gezeigt wird, zeigt im oberen Teil eine Bohrung 20, die niveaugleich mit der Bohrung 19 abschließt und zur Aufnahme der Verdrehsicherung 11 bestimmt ist. Die Ziffern 21 bezeichnen das Gewinde, auf das die Kappe 5 aufgeschraubt wird. Am unteren Ende befindet sich der Durchtritt 22 für den Dorn 3. Der Aufsatz des Grundkörpers 1 ist an seiner unteren Seite mit dem trapezförmigen Teil des Grundkörpers 1 verschweißt.

Bei der Ausbildung der erfindungsgemäßen Vorrichtung als Grippzange kann deren untere Wange über ein Schraubelement in üblicher Weise verstellt werden, also durch Vergrößern oder Verkleinern an die Griffweite einer Leitung, die damit gehalten und angestochen werden soll, angepaßt werden. Auf diese Weise kann jeweils die optimale Spannkraft eingestellt werden.

Die erfindungsgemäßen Anstechvorrichtungen werden über die Leitungsansätze 4 in üblicher Weise an Entsorgungsleitungen und Behälter angeschlossen, über die das abzuführende Medium, etwa ein Kühlmedium, ordnungsgemäß gesammelt werden kann. Durch die Dichtung 2 an der Unterseite des Grundkörpers 1 ist sichergestellt, daß das zu entsorgende Medium nicht in die Umwelt gelangt. Die Dichtheit der Vorrichtung kann aus Sicherheitsgründen vor dem Anzapfen geprüft werden, beispielsweise durch Beaufschlagen der Leitung mit Preßluft.

Die Halteelemente der erfindungsgemäßen Vorrichtung sind so ausgelegt, daß ein Anstechen bis zu Rohrabmessungen von 80 mm Durchmesser möglich ist. Eine solche Anpassung ist insbesondere dann einfach, wenn die erfindungsgemäße Vorrichtung als Grippzange ausgebildet ist.

## Ansprüche

1. Vorrichtung zum Anstechen einer Leitung, insbesondere einer Druckleitung einer zu entsorgenden Kühlvorrichtung, mit einem Grundkörper (1), der eine gegen die anzustechende Leitung wirkende Dichtung (2) aufweist, einem Anstechdorn (3), einem Leitungsanschluß (4) sowie einer Haltevorrichtung (16, 17) für die anzustechende Leitung, **dadurch gekennzeichnet,** daß der Dorn (3) im Innern des Grundkörpers (1) senkrecht zur anzustechenden Leitung verschiebbar ist, der Grundkörper (1) eine Kappe (5) aufweist, die gleichgerichtet mit dem Dorn (3) senkrecht zur anzustechenden Leitung verschiebbar ist, und der Dorn (3) im Kappenkopf (6) gelagert ist und mit der Kappe (5) verschieblich ist.

2. Vorrichtung nach Anspruch 1, **dadurch gekennzeichnet,** daß der Dorn (3) massiv ausgebildet ist.

3. Vorrichtung nach Anspruch 1 oder 2, **dadurch gekennzeichnet,** daß der Dorn (3) an seinem leitungsabgewandten Ende über eine Kugel (7) im Kappenkopf (6) gelagert ist.

4. Vorrichtung nach einem der Ansprüche 1 bis 3, **dadurch gekennzeichnet,** daß der Dorn (3) an seinem leitungsabgewandten Ende eine ringförmige Aussparung (8) aufweist, in die eine oder mehrere im Kappenkopf (6) gelagerte Kugeln (9) eingreifen.

5. Vorrichtung nach einem der Ansprüche 1 bis 4, **dadurch gekennzeichnet,** daß die Kappe (5) eine Ausdrehsicherung (15) aufweist.

6. Vorrichtung nach einem der Ansprüche 1 bis 5, **dadurch gekennzeichnet,** daß der Grundkörper (1) eine Führungsbuchse (13) zur Aufnahme des Dorns (3) mit einem O-Ring (14) als Schaftdichtung aufweist und der Leitungsanschluß (4) am Grundkörper (1) im Bereich zwischen der Dichtung (2) und dem O-Ring (14) angesetzt ist.

7. Vorrichtung nach einem der Ansprüche 1 bis 6, **dadurch gekennzeichnet,** daß der Dorn (3) in einer Spitze (12) ausläuft, die als schiefer Kegel mit, in der Projektion, zur Peripherie der Basis verlagerter Spitze ausgebildet ist.

8. Vorrichtung nach Anspruch 7, **dadurch gekennzeichnet,** daß der Dorn (3) in seiner Längsrichtung eine Aussparung (10) aufweist, in die eine im Grundkörper (1) verankerte Verdrehsicherung (11) eingreift.

9. Vorrichtung nach einem der Ansprüche 1 bis 8, **dadurch gekennzeichnet**, daß der Kappenkopf (6) mit Schlüsselflächen versehen ist.

10. Vorrichtung nach einem der Ansprüche 1 bis 9, **dadurch gekennzeichnet**, daß die Haltevorrichtung (16, 17) als Grippzange ausgebildet ist.

Fig. 1

Fig. 5

Fig. 2

Fig. 3

Fig. 4

Fig.6

6

5

9

18

19

13

20

21

21

22

Europäisches
Patentamt

**EUROPÄISCHER
RECHERCHENBERICHT**

Nummer der Anmeldung

**EP 90 12 1323**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 018 246 (LANGSTROTH)<br>* Spalte 1, Zeilen 3-6; Figuren 2,3,4 *<br>– – – | 1,2,9 | F 16<br>L 41/06 |
| Y<br>X | <br>US-A-4 611 624 (SNYDER)<br>* Spalte 1, Zeilen 6-9; Figuren 2,3,6 *<br>– – – | 3,7,10<br>1,2 | |
| X | US-A-3 915 192 (SKAVARENINA)<br>* Zusammenfassung; Figuren 3,5 *<br>– – – | 1,9 | |
| X | US-A-3 448 758 (MULLINS)<br>* Figuren 1,2 *<br>– – – | 1,9 | |
| Y | DE-A-2 143 224 (BOCCEDA)<br>* Figuren 1,3 *<br>– – – | 3,7 | |
| A<br>Y | <br>US-A-3 698 419 (TURA)<br>* Figur 2 *<br>– – – | 2<br>10 | |
| A | US-A-3 495 615 (EHRENS & WEINER)<br>* Figuren 1,2,4A,4B *<br>– – – – – | 2,4,6,7 | RECHERCHIERTE SACHGEBIETE (Int. Cl.5)<br><br>F 16 L |

Der vorliegende Recherchenbericht wurde für alle Patentansprüche erstellt

| Recherchenort | Abschlußdatum der Recherche | Prüfer |
|---|---|---|
| Den Haag | 07 Februar 91 | BUDTZ-OLSEN A. |